# EUROPEAN PATENT APPLICATION

(11) **EP 4 783 746 A1**
(43) Date of publication of application: **29.07.2026**
(21) Application number: 25153687.6
(22) Date of filing: 24.01.2025
(51) Int. Cl.: H05B 47/18, H04B 10/116, H05B 47/19, H05B 47/195

(54) **DRIVER CONFIGURED TO DRIVE RADIATION MEANS, DEVICE COMPRISING DRIVER AND LIGHTING SYSTEM**

(71) Applicant: Tridonic GmbH & Co. KG, 6851 Dornbirn (AT)
(72) Inventor: Schneider, Miguel Philipp, 6851 Dornbirn (AT); Romano, Fabio, 6851 Dornbirn (AT); Lochmann, Frank, 6851 Dornbirn (AT)
(74) Representative: Rupp, Christian

(57) **Abstract**

The present invention provides a driver (10) configured to drive radiation means (20), wherein the radiation means (20) are configured to radiate at least one of visible light, ultraviolet radiation and infrared radiation. Optionally, the radiation means are one or more light emitting diodes (LEDs). The driver (10) comprises a control unit (1) configured to control an electrical supply by the driver (10) to the radiation means (20) when the radiation means (20) are electrically connected with the driver (10). The driver (10) comprises a sensor unit (2) configured to detect at least one of visible light, ultraviolet radiation and infrared radiation. The control unit (1) is configured to wirelessly receive via the sensor unit (2) DALI signals. The control unit (1) is configured to wirelessly transmit DALI signals by controlling the electrical supply of the radiation means (20) by the driver (10) accordingly.

## Description

The present invention relates to a driver configured to drive radiation means, such as one or more light emitting diodes (LEDs), being configured to radiate at least one of visible light, ultraviolet radiation and infrared radiation. The present invention also relates to a device comprising such a driver and to a lighting system comprising multiple such devices.

The term "lighting means" may be used instead of the term "radiation means". The term "emit" may be used instead of the term "radiate".

In a lighting system data is communicated between the members of the lighting system for exchanging information between them. Such communication is desired to be protected against external influences from outside the lighting system, such as malicious attacks. With regard thereto regulations exist, such as the NIS2 directive of the European Union comprising rules with regard to cybersecurity. This regulation is also directed to data communication in building management systems and lighting systems.

A well-known data communication system in the field of lighting is a digital addressable lighting interface system (DALI system). Herein, the term "DALI" refers to the international IEC 62386 standard that is well known in the field of lighting. For example, the international IEC 62386 standard comprises DALI-1 (also referred to as "DALI version-1"), DALI-2 (also referred to as "DALI version-2", an extension of DALI-1), D4i (an extension of DALI-2), DALI+ (an extension of DALI-2 and D4i) etc. Often DALI-1 is referred to by only the term "DALI", but herein the term "DALI" generally refers to the international IEC 62386 standard. Thus, for example, the terms "DALI signal" and "wired DALI bus" stand for a signal according to the IEC 62386 standard and a wired bus configured for communicating according to the IEC 62386 standard, respectively.

Generally, a DALI system is mainly a wired communication system, e.g. the members are connected with each other via a wired DALI bus for communication according to the DALI standard with each other. However, at a last stage of data communication in a DALI system the data may be communicated using radio communication protocols. Members of a DALI system may correspond to members of a lighting system that are configured for DALI communication, such as luminaires, light switches, light push buttons, sensors etc. Since they are configured for the communicating according to DALI, they may be referred to as DALI devices. The term "DALI system" and "DALI communication system" may be used as a synonym. The part of a DALI system configured for wireless communication according to DALI with each other may be referred to as "DALI wireless communication system".

The communication in a DALI system using radio communication protocols may be subject to malicious attacks. A malicious attack may comprise manipulating the wireless communication and/or to retrieving the information being wirelessly communicated without being authorized for it.

Therefore, it is an object of the present invention to provide means that allows improving a protection of a wireless DALI communication, i.e. of data wirelessly communicated in the form of DALI signals, against malicious attacks.

This and other objects, which become apparent upon reading the following description, are solved by the subject-matter of the independent claim. The dependent claims refer to preferred embodiments of the invention.

According to a first aspect of the invention, a driver configured to drive radiation means is provided. Optionally the radiation means are one or more light emitting diodes (LEDs). The radiation means are configured to radiate at least one of visible light, ultraviolet radiation and infrared radiation. The driver comprises a control unit configured to control an electrical supply by the driver to the radiation means when the radiation means are electrically connected with the driver. The driver comprises a sensor unit configured to detect at least one of visible light, ultraviolet radiation and infrared radiation. The control unit is configured to wirelessly receive via the sensor unit DALI signals. In addition or alternatively, the control unit is configured to wirelessly transmit DALI signals by controlling the electrical supply of the radiation means by the driver accordingly.

Thus, the first aspect of the invention proposes to use at least one of visible light, ultraviolet radiation and infrared radiation instead of radio waves for wirelessly communicating DALI signals. This allows improving the protection of data being wirelessly communicated in the form of DALI signals as a wireless communication in the form of at least one of visible light, ultraviolet radiation and infrared radiation is constrained to a room, in which the driver is located. Namely, visible light, ultraviolet radiation and infrared radiation cannot travel through walls, closed doors etc., which is possible for radio waves. In other words, wireless communication using at least one of visible light, ultraviolet and infrared is more secure with regard to protecting the communicated data compared to a wireless communication using radio waves as the wireless communication using visible light, ultraviolet and/or infrared requires a line of sight between the transmitter and receiver.

Thus, assuming a DALI wireless communication system comprising multiple drivers of the first aspect is installed within a room of the building, it is not possible to interfere with the wireless communication between the drivers that use visible light, ultraviolet radiation and/or infrared radiation from outside the room through a wall or closed door of the room. For indoor areas, such as a room, having windows additional optional features may be implemented, as outlined below, for improving the protection of data with regard to malicious attacks from outside the indoor area through a window. Nevertheless, using at least one of visible light, ultraviolet radiation and infrared radiation for the wireless communication of DALI signals, i.e. wirelessly receiving or wirelessly transmitting the DALI signals, already improves the protection of the data being wirelessly communicated by the DALI signals, especially compared to a wireless communication using radio waves. Transmitting the DALI signals using at least one of visible light, ultraviolet and infrared allows setting up a DALI communication system with reduced effort for wiring the members for the communication, as the DALI signals may be communicated wirelessly. Thus, the driver of the first aspect allows a lighting system using DALI communication to be flexibly and easily extended, i.e. new members being added to the lighting system.

The driver is configured to drive the radiation means by providing the electrical supply to the radiation means. For example, the greater the amount of electrical power (e.g. current and/or voltage) provided by the driver to the radiation means the greater the amount of radiation by the radiation means and vice versa. In other words, the driver may control an operation of the radiation means by controlling the electrical supply of the radiation means. The driver may comprise an electrical power circuit for providing the electrical power to the radiation means and, thus, driving the radiation means. Thus, the control unit may be configured to control the electrical supply of the radiation means by the driver by controlling the electrical power circuit and, thus, the electrical power provided by the electrical power circuit to the radiation means. The electrical power circuit may comprise or may be power electronics. The electrical power circuit may comprise one or more power converters, such as actively switched power converter(s), and optionally one or more filter(s) and/or one or more rectifiers. The control unit may be configured to control the electrical power supplied by the electrical power circuit to the radiation means by controlling a switching of the actively switched power converter(s). The present invention is not limit to a specific electrical power circuit and, thus, any known type of electrical power circuit may be used. The term "electrical energy supply circuit" may be used instead of the term "electrical power circuit". The driver may be configured to be electrical connected with an external electrical energy source, such as mains and/or an external battery, and/or may comprise one or more batteries (optionally at least one being rechargeable) for being electrically powered and being able to provide the electrical supply to the radiation means. The electrical power circuit may be arranged in a housing of the driver.

In case the radiation means are one or more LEDs, the driver may be referred to as "LED driver". The one or more LEDs may comprise any known type of LED. The one or more LEDs being multiple LEDs may comprise at least two different types of LEDs. The one or more LEDs may comprise at least one of one or more LEDs configured to emit visible light, one or more LEDs configured to emit ultraviolet radiation and one or more LEDs configured to emit infrared radiation. Herein, the terms "ultraviolet radiation" and "infrared radiation" may be abbreviated by the terms "ultraviolet" and "infrared", respectively. The radiation means, e.g. the one or more LEDs, may be configured to radiate electromagnetic waves having wavelengths in the range between 1 nm and 2.5 µm. For example, the radiation means may radiate at least one of electromagnetic waves having wavelengths in the range between 1 nm and 400 nm, electromagnetic waves having wavelengths in the range between 400 nm and 780 nm, and electromagnetic waves having wavelengths in the range between 780 nm and 2.5 µm.

The sensor unit may comprise one or more sensors for detecting at least one of visible light, ultraviolet and infrared. The sensor unit is not limited to a specific implementation form and, thus, may be implemented by any means known in the art. Optionally, the sensor unit is configured to detect radiation that the radiation means are configured to radiate. For example, in case the radiation means are configured to emit light the sensor unit may be configured to detect visible light.

The control unit may be or may comprise at least one of microprocessor(s), processor(s), controller(s), microcontroller(s), application specific integrated circuit(s) (ASIC(s)), field programmable gate array(s) (FPGA(s)), etc. The control unit may be configured to wirelessly receive via the sensor unit DALI signals by processing the detection results of the sensor unit and determining the DALI signals in the detection results that were transmitted in the form of visible light, ultraviolet or infrared detected by the sensor unit. That is, the DALI signals are modulated on the visible light waves, ultraviolet waves or infrared waves. Optionally, the wireless DALI signals may be communicated in the form of pulses of visible light, ultraviolet or infrared. A wireless communication using visible light may be referred to as visible light communication (VLC). The DALI signals wirelessly transmitted using visible light, infrared or ultraviolet may be referred herein as "wireless DALI signals".

The control unit may be configured to wirelessly transmit DALI signals by controlling the electrical supply of the radiation means by the driver such that the DALI signals are modulated on at least one of the visible light, infrared and ultraviolet radiated by the radiation means according to the electrical supply. By controlling the electrical supply of the radiation means by the driver, the control unit controls the radiation of visible light, ultraviolet and/or infrared by the radiation means. Thus, the control unit is configured to control a modulation of the visible light, ultraviolet and/or infrared radiated by the radiation means. In other words, the control unit is configured to modulate the DALI signals on at least one of the visible light, ultraviolet and infrared radiated by the radiation mean by controlling the electrical supply of the radiation means by the driver. Using the sensor unit and the radiation means (by controlling the electrical supply of them by the driver), the driver is configured to wirelessly communicate (i.e. wirelessly receive and transmit) DALI signals in the form of visible light, ultraviolet and/or infrared.

The DALI signals may be modulated on at least one of visible light, ultraviolet and infrared according to any means known in the art. Accordingly, the DALI signals modulated on visible light, ultraviolet or infrared may be demodulated, i.e. retrieved, from the visible light, ultraviolet or infrared according to any means known in the art. The sensor unit and/or the control unit may demodulate the wirelessly received DALI signals. Optionally, the sensor unit may be configured to evaluate the wireless received DALI signals and provide the evaluation results as detection result to the control unit. For example, the sensor unit may be configured to retrieve (e.g. demodulate) the DALI signals wirelessly communicated in the form of visible light, ultraviolet and/or infrared and, thus, the information comprise by the DALIs signals. Optionally, the sensor unit may be configured to detect visible light, ultraviolet and/or infrared and provide information on said detection as detection results to the control unit, so that the control unit evaluates the detection results in order to retrieve (e.g. demodulate) the DALI signals wirelessly communicated in the form of visible light, ultraviolet and/or infrared and, thus, the information comprise by the DALIs signals. Modulating DALI signals on visible light, ultraviolet or infrared may comprise modulating the DALI frames (e.g. 8 bit frames, 16 bit frames, 24 bit frames, 32 bit frames) and optionally additional information (e.g. a root certificate) on the visible light, ultraviolet or infrared, respectively.

For example, the control unit may wirelessly retransmit the DALI signals wirelessly received via the sensor unit by controlling the electrical supply of the radiation means by the driver accordingly.

The sensor unit and the control unit may be arranged inside a housing of the driver. Optionally, the sensor unit may partly protrude from an inside of the housing to an outside, i.e. partly protrude out of the housing.

The control unit may be configured to control the driver according to the DALI signals wirelessly received via the sensor unit. In other words, the control unit may control operation of the radiation means according to the information comprised in the DALI signals wirelessly received via the sensor unit. For example, in case the radiation means are configured to emit visible light for providing an illumination to an area, the emission of the visible light and, thus, the illumination of the area may be controlled according to the information comprises in the DALI signals. In the aforementioned example, the driver and the radiation means may be part of a luminaire, wherein the radiation means may be or may be part of the light source of the luminaire. In the aforementioned example, the visible light may also be used for the wireless transmission of DALI signals. In addition or alternatively, the radiation means may be configured to radiate ultraviolet and/or infrared and the wireless transmission of the DALI signals may be done using the ultraviolet and/or infrared.

Optionally, the driver comprises a DALI interface configured to be electrically connected with a wired DALI bus. The control unit may be configured to wirelessly transmit DALI signals received via the DALI interface by controlling the electrical supply of the radiation means by the driver accordingly. In addition or alternatively, the control unit may be configured to transmit via the wired DALI bus DALI signals by controlling the DALI interface accordingly.

The term "wired data bus" may be used as a synonym for the DALI bus. The DALI interface is configured to communicate according to the DALI standard via the wired DALI bus when the wired DALI bus is electrically connected with the DALI interface. For this, the DALI interface may be configured to modulate a voltage of the wired DALI bus. The control unit 1 may be configured to control the modulation of the voltage of the wired DALI bus by the DALI interface.

For example, the control unit may retransmit via the wired DALI bus the DALI signals wirelessly received via the sensor unit by controlling the DALI interface accordingly. That is, the control unit may convert the wireless DALI signals provided from the sensor unit to wired DALI signals that are provided by the DALI interface to the wired DALI bus.

The DALI interface may be arranged inside a housing of the driver. Optionally, the DALI interface may partly protrude from an inside of the housing to an outside, i.e. partly protrude out of the housing.

The control unit may be configured to control the driver according to the DALI signals received via the DALI interface. In other words, the control unit may control operation of the radiation means according to the information comprised in the DALI signals received via the DALI interface. For example, in case the radiation means are configured to emit visible light for providing an illumination to an area, the emission of the visible light and, thus, the illumination of the area may be controlled according to the information comprises in the DALI signals. In the aforementioned example, the driver and the radiation means may be part of a luminaire, wherein the radiation means may be or may be part of the light source of the luminaire. In the aforementioned example, the visible light may also be used for the wireless transmission of DALI signals. In addition or alternatively, the radiation means may be configured to radiate ultraviolet and/or infrared and the wireless transmission of the DALI signals may be done using the ultraviolet and/or infrared.

Optionally, the control unit is configured to determine a time of flight (TOF) of a DALI signal wirelessly received via the sensor unit, and ignore the DALI signal in case the determined TOF of the DALI signals is greater than a time threshold.

The time threshold may be set such that the TOF of DALI signals transmitted using visible light, infrared and/or ultraviolet between members of a DALI wireless communication system are smaller than the time threshold. The time threshold may be the maximum TOF of DALI signals wireless transmitted using visible light, infrared and/or ultraviolet between members of a DALI wireless communication system. This allows preventing a malicious attack from outside a room, e.g. via a window, in which the driver may be installed as part of a DALI wireless communication system being installed in the room, the DALI wireless communication system being based on a wireless communication using visible light, ultraviolet and/or infrared. Namely, in case a person transmits from outside the room, e.g. via a window, DALI signals using visible light, ultraviolet and/or infrared, the TOF of such DALI signals will be greater than the time threshold. Thus, the driver or any other member of the DALI wireless communication system will ignore such DALI signals preventing a malicious attack from outside the DALI wireless communication system. The control unit may be configured to block any communication with a source of the DALI signal being ignored.

The determination of TOF of a DALI signal received in the form of at least one of visible light, ultraviolet and infrared may be done according to any means known in the art. For example, the received DALI signal may comprise information on the point of time at which it was transmitted so that using the point of time at which it was received by the driver the TOF may be determined. Alternatively, the DALI signal may be transmitted back and using the point in time of the initial transmission and point of time of receiving the DALI signal again may be used as the TOF. The control unit may be configured to determine using the determined TOF of the DALI signal a distance to and optionally a location of the source that transmitted the DALI signal. For this, the control unit may use the speed of light in order to compute from the TOF of the DALI signal a distance travelled by the DALI signal. Optionally, the control unit may be configured to determine using the TOF of a DALI signal transmitted by a first source and the TOF of a second DALI signal transmitted by a second source the location of the two sources. The aforementioned location may be a relative location. The control unit may be part of a DALI wireless communication system (using visible light, ultraviolet and/or infrared for the wireless communication) and know the distance to other member(s) of the system and optionally the location of the other member(s). The control unit may be configured to determine using the determined TOF of a DALI signal wirelessly received via the sensor unit a distance to and optionally a location of the source that transmitted the DALI signal. The control unit may be configured to determine whether the source of the DALI signal is a member of the system and, thus, a trusted device by comparing the determined distance with the know distance(s) to the other member(s) of the system. Optionally, the control unit may determine whether the source of the DALI signal is a member of the system and, thus, a trusted device by comparing the determined location with the known location(s) of the other member(s) of the system. Thus, the control unit may be configured to considers the DALI signal in case the control unit determines that the DALI signal was wirelessly transmitted from a member of the system (i.e. from a trusted device), otherwise it ignores the DALI signal. The control unit may be configured to block any communication with a source of the DALI signal being ignored.

Optionally, the control unit is configured to determine a TOF of a DALI signal wirelessly received via the sensor unit. The control unit may be configured to determine whether the determined TOF of the DALI signal is within a range of TOFs associated with trusted devices configured to wirelessly transmit DALI signals using one of visible light, ultraviolet radiation and infrared radiation. The control unit may be configured to ignore the DALI signal in case the determined TOF is not within the range of the TOFs associated with the trusted devices.

The range may be selected such that a TOF of a DALI signal being transmitted from a non-trusted device (e.g. a device not being a member of a DALI wireless communication system of which the driver may be a member) is not within the range of the TOFs associated with the trusted devices (e.g. members of the DALI wireless communication system). The control unit may be configured to block any communication with a source of the DALI signal being ignored.

Optionally, the control unit is configured to determine its location with regard to trusted devices by determining the TOF of DALI signals wirelessly received via the sensor unit from the trusted devices.

For example, the control unit may determine its location with regard to trusted devices by using the TOF of the DALI signals wirelessly received via the sensor unit from the trusted devices and triangulation.

Optionally, the control unit is configured to wirelessly transmit the DALI signals with a root certificate of a DALI wireless communication system by controlling the electrical supply of the lighting means by the driver accordingly. In addition or alternatively, the control unit may be configured to ignore a DALI signal wirelessly received via the sensor unit in case the DALI signal is not received together with the root certificate.

Using the root certificate allows preventing devices to participate at the DALI wireless communication based on visible light, ultraviolet and/or infrared that are not trusted devices as only trusted devices know the root certificate. Thus, this allows preventing a malicious attack. For example, all members of a DALI wireless communication system, of which the driver may be a member, may be trusted devices and, thus, know the root certificate and add the root certificate to a wireless communication of DALI signals using visible light, ultraviolet and/or infrared. Therefore, a device not being a member of the DALI wireless communication system will transmit DALI signals without the root certificate and, thus, cannot participate in the wireless communication of the system, as the DALI signals from the aforementioned device not comprising the root certificate will be ignored by the members of the system. This allows preventing a malicious attack from outside the system. The control unit may be configured to block any communication with a source of the DALI signal being ignored.

Optionally, the driver comprises a radio communication unit configured to wirelessly communicate radio signals. The control unit may be configured to put the driver into a security communication mode in which the radio communication unit is deactivated and wireless communication is performed using the sensor unit and the radiation means electrically suppliable by the driver when being electrically connected with the driver.

The radio communication unit allows a wireless communication with devices that are not configured for a wireless communication using visible light, ultraviolet and/or infrared. Thus, this allows a compatibly to communication systems that are not configured for a wireless communication using visible light, ultraviolet and/or infrared. At the same time, the benefits of the wireless communication of DALI signals using visible light, ultraviolet and/or infrared according to the present invention may be maintained as in the security communication mode the radio communication unit is deactivated ensuring that wireless communication is performed using visible light, ultraviolet and/or infrared. The radio communication unit may be arranged in a housing of the driver. Optionally, the radio communication unit may partly protrude from an inside of the housing to an outside, i.e. partly protrude out of the housing.

The components of the device may be arrange in the housing of the device.

In order to achieve the driver according to the first aspect of the present invention, some or all of the above described optional features may be combined with each other.

According to a second aspect of the invention, a device is provided. The device comprises the driver according to the first aspect of the invention, as described above. The device comprises radiation means electrically connected with the driver. Optionally the radiation means are one or more LEDs. The driver is configured to electrically supply the radiation means. The radiation means are configured to radiate at least one of visible light, ultraviolet radiation and infrared radiation.

The one or more LEDs may comprise any known type of LED. The one or more LEDs being multiple LEDs may comprise at least two different types of LEDs. The one or more LEDs may comprise at least one of one or more LEDs configured to emit visible light, one or more LEDs configured to emit ultraviolet radiation and one or more LEDs configured to emit infrared radiation. The radiation means, e.g. the one or more LEDs, may be configured to radiate electromagnetic waves having wavelengths in the range between 1 nm and 2.5 µm. For example, the radiation means may radiate at least one of electromagnetic waves having wavelengths in the range between 1 nm and 400 nm, electromagnetic waves having wavelengths in the range between 400 nm and 780 nm, and electromagnetic waves having wavelengths in the range between 780 nm and 2.5 µm.

The device and the radiation means may be arranged inside a housing of the device. Optionally, the radiation means may partly protrude from an inside of the housing to an outside, i.e. partly protrude out of the housing.

Optionally, the device is a luminaire, and the radiation means are configured to radiate visible light.

That is, the radiation means may be or may be part of a light source of a luminaire. The radiation means may be configured to provide light emission of the luminaire. The visible light may be used for illumination and the wireless communication of DALI signals. Optionally, the radiation means may be configured to additionally radiate ultraviolet and/or infrared. In the aforementioned case, the control unit of the driver may be configured to control the electrical supply of the radiation means such that visible light is radiated by the radiation means for providing an illumination by the luminaire for an area where the luminaire is installed. The control unit of the driver may be configured to control the electrical supply of the radiation means such that at least one of visible light, ultraviolet and infrared is radiated by the radiation means for wirelessly communicating DALI signals by the luminaire. The luminaire may be any type of luminaire. Optionally, the luminaire is an emergency lighting luminaire.

Optionally, the radiation means are multiple LEDs, wherein at least one LED of the multiple LEDs is configured to radiate ultraviolet radiation and/or infrared radiation and a rest of the multiple LEDs is configured to radiate visible light. The control unit of the driver may be configured to wirelessly transmit DALI signals by controlling the electrical supply of the at least one LED of the multiple LEDs by the driver accordingly.

The control unit of the driver may be configured to control the electrical supply of the rest of the multiple LEDs so that visible light is radiated by the rest of the multiple LEDs for providing an illumination by the device, e.g. the luminaire. The control unit of the driver may be configured to control the electrical supply of the at least one LED of the multiple LEDs so that ultraviolet and/or infrared is radiated by the at least one LED of the multiple LEDs for wirelessly transmitting DALI signals by the device, e.g. the luminaire.

Optionally, the device is one of a sensor device, a light switch, a light push button, a central control unit for a lighting system, and a DALI wireless communication gateway.

The DALI wireless communication gateway may be part of a central control unit for a lighting system. DALI wireless communication gateway allows wirelessly connecting multiple devices of the second aspect and, thus, forming a DALI wireless communication system comprising said multiple devices. The term "DALI wireless communication hub" may be used instead of the term "DALI wireless communication gateway". The DALI wireless communication gateway may be a central communication control unit.

The above description with regard to the driver according to the first aspect of the present invention is correspondingly valid for the device according to the second aspect of the present invention. The above description with regard to the device according to the second aspect of the present invention is correspondingly valid for the driver according to the first aspect of the present invention.

The device according to the second aspect of the invention achieves the same advantages as the driver according to the first aspect of the invention.

In order to achieve the device according to the second aspect of the present invention, some or all of the above described optional features may be combined with each other.

According to a third aspect of the invention, a lighting system is provided. The lighting system comprises multiple devices according the second aspect of the invention, as described above. The driver of each device of the multiple devices is configured to determine a TOF of a DALI signal wirelessly received via the sensor unit of the driver, and ignore the DALI signal in case the determined TOF of the DALI signals is greater than a maximum TOF of DALI signals wirelessly transmitted between the multiple devices.

Optionally, the lighting system is an emergency lighting system.

Optionally, the driver of each device of the multiple devices uses a common root certificate for wirelessly communicating DALI signals by electrically supplying the radiation means of the device accordingly.

The above description with regard to the driver according to the first aspect of the present invention and the device according to the second aspect of the present invention is correspondingly valid for the lighting system according to the third aspect of the present invention. The above description with regard to the lighting system according to the third aspect of the present invention is correspondingly valid for the driver according to the first aspect of the present invention and the device according to the second aspect of the present invention.

The lighting system according to the third aspect of the invention achieves the same advantages as the driver according to the first aspect of the invention.

In order to achieve the lighting system according to the third aspect of the present invention, some or all of the above described optional features may be combined with each other.

All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed figures (FIGs.), in which
- **FIG. 1**: shows an example of the driver according to the present invention and an example of a device according to the present invention,
- **FIG. 2**: shows an example of an optional implementation form of the driver and device of FIG. 1, and
- **FIG. 3**: shows an example of a lighting system according to the present invention.

In the figures (FIGs.), corresponding elements have the same reference signs. The size of elements in the FIGs. is not to scale and may be different compared to a real life implementation in order to highlight details of the embodiments.

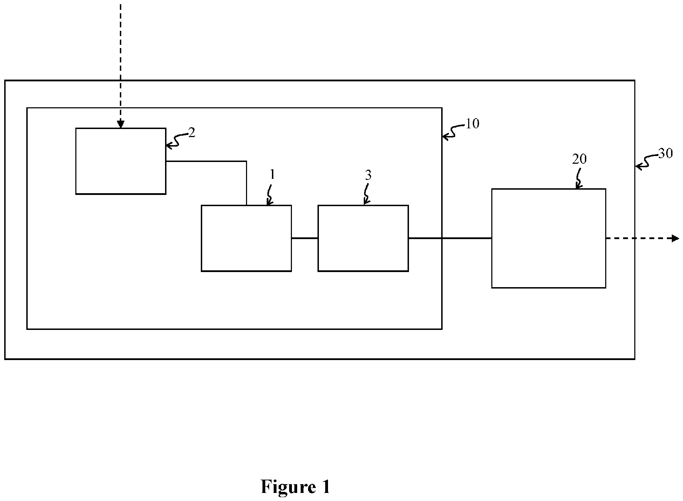

**FIG. 1** shows an example of the driver according to the present invention and an example of a device according to the present invention. The driver of FIG. 1 is an example of the driver according to the first aspect of the invention. Thus, the description of the driver according to the first aspect of the invention is correspondingly valid for the driver of FIG. 1. The device of FIG. 1 is an example of the device according to the second aspect of the invention. Thus, the description of the device according to the second aspect of the invention is correspondingly valid for the device of FIG. 1.

The driver 10 of FIG. 1 is configured to drive radiation means 20. The radiation means 20 are configured to radiate at least one of visible light, ultraviolet radiation and infrared radiation. Optionally the radiation means 20 are one or more light emitting diodes (LEDs). The one or more LEDs may comprise any known type of LED. The one or more LEDs being multiple LEDs may comprise at least two different types of LEDs. The one or more LEDs may comprise at least one of one or more LEDs configured to emit visible light, one or more LEDs configured to emit ultraviolet radiation and one or more LEDs configured to emit infrared radiation. The radiation means 20, e.g. the one or more LEDs, may be configured to radiate electromagnetic waves having wavelengths in the range between 1 nm and 2.5 µm. For example, the radiation means may radiate at least one of electromagnetic waves having wavelengths in the range between 1 nm and 400 nm, electromagnetic waves having wavelengths in the range between 400 nm and 780 nm, and electromagnetic waves having wavelengths in the range between 780 nm and 2.5 µm.

As shown in FIG. 1, the driver 10 comprises a control unit 1 configured to control an electrical supply by the driver 10 to the radiation means 20 when the radiation means 20 are electrically connected with the driver 10. For this, the driver 10 may comprise a electrical power circuit 3 for providing the electrical power to the radiation means 20 and, thus, driving the radiation means 20. Thus, when the radiation means 20 are electrically connected with the driver 10 for being driven by the driver 10, the radiation means 20 are electrically connected with the electrical power circuit 3. The driver 10 may be configured to be electrical connected with an external electrical energy source, such as mains and/or an external battery, and/or may comprise one or more batteries, optionally at least one being rechargeable, (not shown in FIG. 1) for being electrically powered and being able to provide the electrical supply to the radiation means 20. Thus, the electrical power source 3 and other components of the driver 10, such as the control unit 1, may be electrically supplied from the external electrical energy source (when the driver 10 is electrically connected with said source) and/or the one or more batteries.

As shown in FIG. 1, the driver 10 comprises a sensor unit 2 configured to detect at least one of visible light, ultraviolet radiation and infrared radiation. Optionally, the sensor unit 2 is configured to detect the type(s) of radiation which the radiation means 20 are configured to radiate. The control unit 1 is configured to wirelessly receive via the sensor unit 2 DALI signals. In addition or alternatively, the control unit 1 is configured to wirelessly transmit DALI signals by controlling the electrical supply of the radiation means 20 by the driver 10 (e.g. by the electrical power circuit 3) accordingly. For further information on how the control unit 1 may be configured to receive via the sensor unit 2 wireless DALI signals in the form of visible light, ultraviolet and/or infrared and on how the control unit 1 may be configured to transmit wireless DALI signals in the form of visible light, ultraviolet and/or infrared by controlling the electrical supply of the radiation means 20 reference is made to the corresponding description of the driver according to the first aspect of the invention.

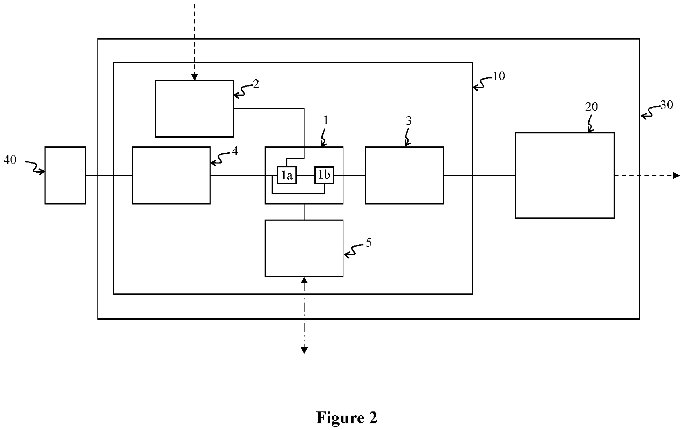

The control unit 1 may be configured to control the driver 10 according to the DALI signals wirelessly received via the sensor unit 2. For example, the radiation means may be configured to emit visible light for providing an illumination, e.g. when the driver 10 and the radiation means 20 are part of a luminaire. In this case, the wireless DALI signals received via the sensor unit 2 may comprise control parameters, such as at least one of a dimming level, color temperature (CCT), light color, light pattern (e.g. blinking), light scene etc., for controlling the illumination providable by the radiation means 20. The control unit 1 may control the electrical supply and, thus, operation of the radiation means 20 according to such control parameters comprised in the wireless DALI signals. This is correspondingly valid for DALI signals received via a wired DALI bus, as may be the case in the implementation form of the driver of FIG. 2.

The control unit 1, the sensor unit 2 and the electrical power control 3 may be arranged in a housing of the driver 10. As shown in FIG. 1, the driver 10 and the radiation means 20 may be part of a device 30. Thus, such device 30 comprises the driver 10 and the radiation means 20 electrically connected with the driver 10, wherein the driver 10 is configured to electrically supply the radiation means 20.

Optionally, the device 30 may be a luminaire, and the radiation means 20 are configured to radiated visible light. The radiation means 20 may be or may be part of the light source of the luminaire for providing illumination. Optionally, the radiation means 20 may radiate visible light for wirelessly transmitting DALI signals in the form of visible light. Optionally, the lighting means 20 may be configured to additionally radiate ultraviolet and/or infrared (in addition to the visible light) for wirelessly transmitting the DALI signals. That is, the control unit 1 may control the electrical supply of the lighting means 20 such that DALI signals are wirelessly transmitted in the form of at least one of visible light, ultraviolet and infrared. For example, the radiation means 20 of the device 30 (e.g. being a luminaire) may be multiple LEDs, wherein at least one LED of the multiple LEDs is configured to radiate ultraviolet and/or infrared and a rest of the multiple LEDs is configured to radiate visible light. In the aforementioned case, the control unit 1 of the driver 10 may be configured to wirelessly transmit DALI signals by controlling the electrical supply of the at least one LED of the multiple LEDs by the driver accordingly. Optionally, the control unit 1 of the driver 10 is configured to wirelessly transmit DALI signals by controlling the electrical supply of the rest of the multiple LEDs by the driver accordingly.

The device 30 is not limited to being a luminaire. The device 30 may be another member of a lighting system. Optionally, the device 30 may be one of a sensor device (e.g. ambient light sensor device, movement and/or presence detecting sensor device, temperature sensor device etc.), a light switch (e.g. for controlling on/off and optionally dimming of one or more luminaires), a light push button (e.g. for controlling on/off and optionally dimming of one or more luminaires), a central control unit for a lighting system (e.g. for controlling one or more luminaires and, thus, light emission, i.e. illumination, provided by the one or more luminaires), and a DALI wireless communication gateway (e.g. for controlling and/or supporting DALI communication, such as converting wireless DALI signals to wired DALI signals and vice versa).

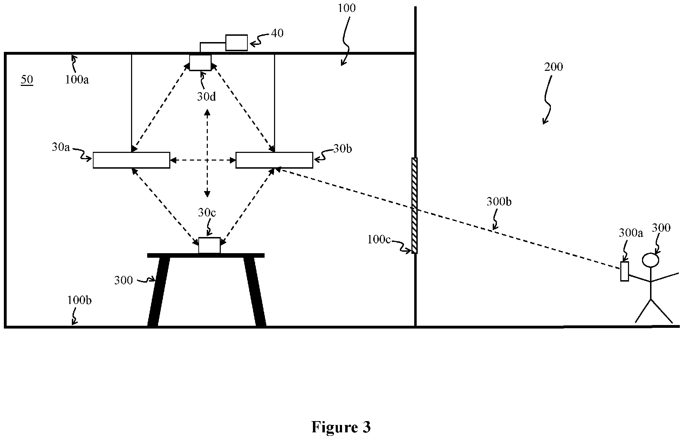

The components of the device 30, such as the driver 10 and the radiation means 20, may be arranged in a housing of the device 30. For further information, such as optional features and optional implementation forms, on the driver 10 and the device 30 of FIG. 1 reference is made to the description of the driver according to the first aspect and the device according to the second aspect of the invention and to the description of FIGs. 2 and 3.

**FIG. 2** shows an example of an optional implementation form of the driver and device of FIG. 1. In the following mainly optional features of the driver of FIG. 2 are described. These optional features may be separately (i.e. without at least one other feature or without the other features) or together implemented in the driver. The description of the driver of FIG. 1 is valid for the driver of FIG. 2. The description of the device of FIG. 1 is valid for the device of FIG. 2.

As shown in FIG. 2, the driver 10 may comprise a DALI interface 4 configured to be electrically connected with a wired DALI bus 40. The control unit 1 may be configured to wirelessly transmit DALI signals received via the DALI interface 4 by controlling the electrical supply of the radiation means 20 by the driver accordingly. In addition or alternatively, the control unit 1 may be configured to transmit via the wired DALI bus 40 DALI signals by controlling the DALI interface 4 accordingly (assuming that the DALI bus 40 is electrically connected with the DALI interface 4). Thus, the driver 10 may be configured to communicate wired DALI signals using the DALI interface and wireless DALI signals using the sensor unit 2 (for receiving the wireless DALI signals) and the radiation means (for transmitting the wireless DALI signals). According to Figure 2, the DALI bus 40 is outside the device 30. Thus, electrically connecting the DALI bus 40 with the device 30 electrically connects the DALI bus 40 with the DALI interface 4 of the driver 10. Optionally, the DALI bus 40 may be part of the device 30. For example, the DALI bus 40 may be an internal data bus of the device 30, e.g. being a luminaire, for allowing a wired communication between the components of the device 30. The control unit 1 may be configured to control the driver 1 according to the DALI signals received via the DALI interface 4. The DALI interface 4 may be arranged in the housing of the driver 10.

Optionally, as shown in FIG. 2, the control unit 1 may comprise a conversion unit 1a configured to convert wireless DALI signals communicated in the form of visible light, ultraviolet and/or infrared to wired DALI signals and vice versa, and a logic unit 1b for data processing and control functions of the driver 1, such as controlling the electrical power circuit 3. For example, the conversion unit 1a may convert wireless DALI signals received by the sensor unit 2 by demodulating the information from the detection results of the sensor unit and using said information for providing via the DALI interface said information (comprised by the received wireless DALI signals) in the form of wired DALI signals to the wired DALI bus. The DALI interface may modulate a voltage of the wired DALI bus for generating the wired DALI signals, wherein the control unit 1 is configured to control the modulation of the voltage of the wired DALI bus by the DALI interface. For example, the conversion unit 1a may convert wired DALI signals received by the DALI interface by demodulating the information from the voltage detection results of the DALI interface 4 and providing said information so that the control unit 1, e.g. the logic unit 1b, may control the electrical supply of the radiation means 20 by the driver, e.g. the electrical power circuit 3, such that said information is modulated on visible light, ultraviolet and/or infrared radiated by the radiation means 20. The control unit 1 is not limited to the implementation of FIG. 2 and, thus, may be differently implemented. The above description is correspondingly valid for a different implementation of the control unit 1.

In FIGs. 1 and 2, wireless DALI signals in the form of visible light, ultraviolet and/or infrared are indicated by a dashed arrow. Thus, a dashed arrow is directed to the sensor unit 2 for indicating a receival of such wireless DALI signals via the sensor unit 2, and a dashed arrow is directed away from the radiation means 20 for indicating a transmission of such wireless DALI signals via the radiation means.

Optionally, the driver 10 comprises a radio communication unit 5 configured to wirelessly communicate radio signals. The optional radio communication unit 5 may be present irrespective of whether the DALI interface 4 is present or not, and vice versa. The control unit 1 may be configured to put the driver 10 into a security communication mode in which the radio communication unit 5 is deactivated and wireless communication is performed using the sensor unit 2 and the radiation means 20 electrically suppliable by the driver 1 when being electrically connected with the driver 1. Outside the security communication mode, such as in a compatibly communication mode, the wireless communication may take place via the radio communication unit 5 in addition to the wireless communication via the sensor unit 2 (for receiving the wireless DALI signals in the form of visible light, ultraviolet and/or infrared) and the radiation means 20 (for transmitting the wireless DALI signals). The wired communication via the DALI interface may take place in the security communication mode and outside the security communication mode, i.e. irrespective of whether the security communication mode is activated or not. The radio communication unit 5 may wirelessly communicate using radio signals/waves according to any known method or standard. For example, the radio communication unit may communicate according to Bluetooth, wireless local area network (WLAN), radio frequency identification (RFID) communication (e.g. near field communication (NFC)), etc. The radio communication unit 5 may be arranged in the housing of the driver 10. In FIG. 2, wireless signals, such as DALI signals, in the form of radio waves are represented by a dash-dotted double arrow.

For further information on the driver 10 and the device 30 of FIG. 2 reference is made to the description of the driver according to the first aspect and the device according to the second aspect of the invention and to the description of FIG 3.

FIG. 3 shows an example of a lighting system according to the present invention. The lighting system of FIG. 3 is an example of the lighting system according to the third aspect of the invention. Thus, the description of the lighting system according to the third aspect of the invention is correspondingly valid for the lighting system of FIG. 3.

The lighting system 50 of FIG. 3 is assumed to be installed inside a room 100 for providing illumination inside the room 100. The lighting system 50 may comprise multiple devices 30a, 30b, 30c, and 30d according to the second aspect of the invention, such as devices of FIG. 1 and/or FIG. 2. For example, the lighting system 50 may comprise two devices being two luminaires 30a and 30b, a device being a DALI wireless communication gateway 30d and a device being a central control unit 30c for the lighting system 50, e.g. being arranged on a table 300 arranged on the ground 100b of the room 100. The devices 30a, 30b and 30d may be installed at a ceiling 100a of the room. The number of devices and/or type of devices of the lighting system 50 shown in FIG. 3 may be different. The installation location of the devices shown in Figure 3 may be different and/or the installation area may be different. The present invention and, thus, the lighting system 50 of FIG. 3 may be used in any indoor area. Optionally, the present invention and, thus, the lighting system 50 of FIG. 3 may be used in an outdoor area. The description of FIG. 3 is accordingly valid in case of a different implementation of the lighting system 30, such as different number of devices, different types of devices and/or different installation location of the devices compared to FIG. 3.

As shown in FIG. 3, the device 30d may comprise a DALI interface and may be electrically connected with a wired data bus 40, i.e. wired DALI bus. According to FIG. 3, the bus 40 may be arranged in a space above or within the ceiling 100a. This is only by way of example and, thus, the bus may be differently provided. The devices 30a, 30b, 30c and 30d may communicate between each other wireless DALI signals in the form of at least one of visible light, ultraviolet and infrared. Such wireless communication is exemplarily indicated in FIG. 3 by dashed double arrows between the devices. Thus, the devices 30a, 30b, 30c and 30d of the lighting system 50 form a DALI wireless communication system.

For determining whether a received wireless DALI signal (in the form of one of visible light, ultraviolet and infrared) is transmitted by a member of the DALI wireless communication system (i.e. a member of the lighting system 50) and, thus, is a trusted device, the driver 10 of each device of the devices 30a, 30b, 30c and 30d may determine a time of flight (TOF) of the received wireless DALI signal, and ignore the DALI signal in case the determined TOF of the DALI signal is greater than a maximum TOF of DALI signals wirelessly transmitted between the devices 30a, 30b, 30c and 30d. In the example of FIG. 3, DALI signals being wirelessly communicated in the form of visible light, ultraviolet and/or infrared between the devices 30c and 30d have the maximum TOF among DALI signals wirelessly communicated between each device pair of the devices 30a to 30d of the lighting system 50. Thus, in case a person 300 outside the room 100 performs an malicious attack through a window 100c of the room 100 using a device 300a configured to wirelessly communicate DALI signals in the form of at least one of visible light, ultraviolet and infrared, the malicious attack may be prevented. Namely, as can be seen from FIG. 3, the wireless DALI signal received e.g. by the device 30b from the person 300 outside the room 100 will have a TOF that is greater than the aforementioned maximum TOF of wireless signals transmitted by members of the DALI wireless communication system and, thus, by trusted devices. As a result, the device 30b ignores the wireless DALI signal transmitted from the person 300 outside the room through the window 100c. This prevent the malicious attack. The area outside the room 100 is labeled with the reference sign "200".

Thus, the driver 10 of each device of the devices 30a to 30d of the lighting system 50 may be configured to determine TOF of a DALI signal wirelessly received via the sensor unit 2 of the driver 10, and ignore the DALI signal in case the determined TOF of the DALI signals is greater than a time threshold. The time threshold may be the aforementioned maximum TOF. The time threshold may be set according to the dimensions of the room 100 and the installation locations of the members of the lighting system 50. For example, the time threshold may be set such that only members of the lighting system 50 transmit wireless signals having a TOF when being received by another member of the lighting system 50 that is smaller than the time threshold.

Optionally, the driver 10 of each device of the devices 30a to 30d of the lighting system 50 may be configured to determine whether the determined TOF of the DALI signal wirelessly received via the sensor unit 2 is within a range of TOFs associated with trusted devices configured to wirelessly transmit DALI signals using at least one of visible light, ultraviolet radiation and infrared radiation. The driver 10 may be configured to ignore the DALI signal in case the determined TOF is not within the range of the TOFs associated with the trusted devices. Optionally, the driver 10 of each device of the lighting system 50 is configured to determine its location and, thus, the location of the device with regard to trusted devices (i.e. the other members of the lighting system 50) by determining the TOF of DALI signals wirelessly received via the sensor unit 2 of the driver 10 from the trusted devices. Optionally, the driver 10 of each device of the devices 30a to 30d may determine whether the source of a received wireless DALI signal is a member of the system and, thus, a trusted device by comparing the determined location of the source with the known location(s) of the other member(s) of the system 50. Thus, the driver 10 may be configured to consider the DALI signal in case the control unit determines that the DALI signal was wirelessly transmitted from a member of the system (i.e. from a trusted device), otherwise it ignores the DALI signal

Optionally, the driver 10 of each device of the devices 30a to 30d uses a common root certificate for wirelessly communicating DALI signals by electrically supplying the radiation means 20 of the device accordingly. This allows providing additional protection against malicious attacks in case the dimensions of the lighting system 50 and thus the DALI wireless communication system formed by the members (the devices 30a to 30d) of the lighting system 50 are such that a distance from outside the room 100 through the window 100c is within distances between two members of the lighting system 50.

When initially setting up the lighting system 50 a security key may be provided to each device of the devices 30a to 30d of the lighting system 50 e.g. using radio frequency identification (RFID) communication, such as near field communication (NFC). Using the security key a device, such as the central control unit 30c, of the lighting system 50 may provide each of the devices of the lighting system 50 with the root certificate to be transmitted with the wireless DALI signals in the form of visible light, ultraviolet or infrared in order to authenticate the wireless DALI signals as originating from a member of the lighting system 50 and, thus, from a trusted device.

In order to add a new device as a member of the lighting system 50 and, thus, the DALI wireless communication system the following steps may be performed. The new device may automatically transmit wireless signals in the form of one of visible light, ultraviolet and infrared in order to advertise itself, i.e. inform the lighting system 50 about its presence. A device of the lighting system, e.g. the central control unit 30c, may start a password authenticated session establishment process. For this a password that is saved on the new device, e.g. in the form of a QR code, may be used. For example, the device of the lighting system 50, e.g. the central control unit 30c, may receive the password from the new device and inform a user installing the new device on this password. The user may then check whether the password obtained by the device of the lighting system 50, e.g. the central control unit 30c, is the password of the new device. After the new device is authenticated using its password, the device of the lighting system 50, e.g. the central control unit 30c, may optionally generate and provide an intermediate certificate to the new device. This intermediate certificate may be used for securely receiving the root certificate. The device of the lighting system 50, e.g. the central control unit 30c, may provide the root certificate used by the devices 30a to 30d of the lighting system 50 for the wireless DALI communication. Thus, the new device can use the root certificate for transmitting wireless DALI signals in the form of visible light, ultraviolet and/or infrared, wherein the root certificate authenticates the DALI signals wirelessly transmitted by the new device as originating from a member of the lighting system 50 and, thus, from a trusted device. In this way the new device can become a member of the DALI wireless communication system and, thus, participate in the wireless communication of DALI signals using at least one of visible light, ultraviolet and/or infrared within the lighting system 50.

Herein, the wireless communication of DALI signals may be done using at least one of visible light, ultraviolet radiation and infrared radiation. Which of the aforementioned types of radiation will be used for providing the driver, the device and the lighting system according to the present invention depends on the type of radiation means and type of sensor units being used.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A driver (10) configured to drive radiation means (20), optionally one or more light emitting diodes, LEDs, the radiation means (20) being configured to radiate at least one of visible light, ultraviolet radiation and infrared radiation, wherein the driver (10) comprises
- a control unit (1) configured to control an electrical supply by the driver (10) to the radiation means (20) when the radiation means (20) are electrically connected with the driver (10), and
- a sensor unit (2) configured to detect at least one of visible light, ultraviolet radiation and infrared radiation, wherein
- the control unit (1) is configured to
- wirelessly receive via the sensor unit (2) DALI signals, and/or
- wirelessly transmit DALI signals by controlling the electrical supply of the radiation means (20) by the driver (10) accordingly.

2. The driver (10) according to claim 1, wherein
- the control unit (1) is configured to control the driver (10) according to the DALI signals wirelessly received via the sensor unit (2).

3. The driver (10) according to claim 1 or 2, wherein
- the driver (10) comprises a DALI interface (4) configured to be electrically connected with a wired DALI bus (40), and
- the control unit (1) is configured to
- wirelessly transmit DALI signals received via the DALI interface (4) by controlling the electrical supply of the radiation means (20) by the driver (10) accordingly, and/or
- transmit via the wired DALI bus (40) DALI signals by controlling the DALI interface (4) accordingly.

4. The driver (10) according to claim 3, wherein
- the control unit (1) is configured to control the driver (10) according to the DALI signals received via the DALI interface (4).

5. The driver (10) according to any one of the previous claims, wherein the control unit (1) is configured to
- determine a time of flight, TOF, of a DALI signal wirelessly received via the sensor unit (2), and
- ignore the DALI signal in case the determined TOF of the DALI signals is greater than a time threshold.

6. The driver (10) according to any one of the previous claims, wherein the control unit (1) is configured to
- determine a TOF of a DALI signal wirelessly received via the sensor unit (2),
- determine whether the determined TOF of the DALI signal is within a range of TOFs associated with trusted devices configured to wirelessly transmit DALI signals using one of visible light, ultraviolet radiation and infrared radiation, and
- ignore the DALI signal in case the determined TOF is not within the range of the TOFs associated with the trusted devices.

7. The driver (10) according to claim 5 or 6, wherein
- the control unit is configured to determine its location with regard to trusted devices by determining the TOF of DALI signals wirelessly received via the sensor unit (2) from the trusted devices.

8. The driver (10) according to any one of the previous claims, wherein the control unit is configured to
- wirelessly transmit the DALI signals with a root certificate of a DALI wireless communication system by controlling the electrical supply of the lighting means (20) by the driver (10) accordingly, and/or
- ignore a DALI signal wirelessly received via the sensor unit (2) in case the DALI signal is not received together with the root certificate.

9. The driver (10) according to any one of the previous claims, wherein
- the driver (1) comprises a radio communication unit (5) configured to wirelessly communicate radio signals, and
- the control unit (1) is configured to put the driver (10) into a security communication mode in which the radio communication unit (5) is deactivated and wireless communication is performed using the sensor unit (2) and the radiation means (20) electrically suppliable by the driver (10) when being electrically connected with the driver (10).

10. A device (30) comprising
- the driver (10) according to any one of claims 1 to 9, and
- radiation means (20), optionally one or more LEDs, electrically connected with the driver (10), wherein
- the driver (10) is configured to electrically supply the radiation means (20), and
- the radiation means (20) are configured to radiate at least one of visible light, ultraviolet radiation and infrared radiation.

11. The device (30) according to claim 10, wherein
- the device (30) is a luminaire, and
- the radiation means (20) are configured to radiate visible light.

12. The device (30) according to claim 11, wherein
- the radiation means (20) are multiple LEDs,
- at least one LED of the multiple LEDs is configured to radiate ultraviolet radiation and/or infrared radiation and a rest of the multiple LEDs is configured to radiate visible light, and
- the control unit (1) of the driver (10) is configured to wirelessly transmit DALI signals by controlling the electrical supply of the at least one LED of the multiple LEDs by the driver (10) accordingly.

13. The device (30) according to claim 10, wherein
- the device (30) is one of a sensor device, a light switch, a light push button, a central control unit for a lighting system, and a DALI wireless communication gateway.

14. A lighting system (50) comprising
- multiple devices (30a, 30b, 30c, 30d) according to any one of claims 10 to 13, wherein
- the driver (10) of each device of the multiple devices (30a, 30b, 30c, 30d) is configured to determine a TOF of a DALI signal wirelessly received via the sensor unit (2) of the driver (10), and
- ignore the DALI signal in case the determined TOF of the DALI signals is greater than a maximum TOF of DALI signals wirelessly transmitted between the multiple devices (30a, 30b, 30c, 30d).

15. The lighting system (50) according to claim 14, wherein
- the driver (10) of each device of the multiple devices (30a, 30b, 30c, 30d) uses a common root certificate for wirelessly communicating DALI signals by electrically supplying the radiation means (20) of the device (30) accordingly.
